# EUROPEAN PATENT SPECIFICATION

(11) **EP 0 526 201 B1**
(45) Date of publication and mention of the grant of the patent: **18.12.1996**
(21) Application number: 92306954.6
(22) Date of filing: 30.07.1992
(51) Int. Cl.: H04N 7/24, H04N 7/32, H04N 7/30

(54) **Video signal transmission apparatus and method**
Videosignalübertragungsgerät und Verfahren davon
Appareil et méthode de transmission de signal vidéo

(30) Priority: 31.07.1991 JP 214659/91; 31.07.1991 JP 214662/91; 16.10.1991 JP 298473/91
(43) Date of publication of application: 03.02.1993
(73) Proprietor: SONY CORPORATION, Tokyo (JP)
(72) Inventor: Kojima, Yuichi, Shinagawa-ku, Tokyo 141 (JP)
(74) Representative: Robinson, Nigel Alexander Julian

(56) References cited:
- EP-A- 0 424 060
- US-A- 4 077 053

## Description

This invention relates to a video signal transmission system for transmitting a video signals of compressed data, and is more particularly suitable for application to a video signal transmission system which transmits picture data compressed by a method of orthogonal transformation, e.g discrete cosine transformation and the like.

In conventional video signal transmission systems, for example, picturephones or tele-conference systems, which transmit video signals of moving pictures to a distant place, video signals are coded by using correlation between the frames of video signals so that more effective transmission of significant information and effective utilization of transmission line can be achieved.

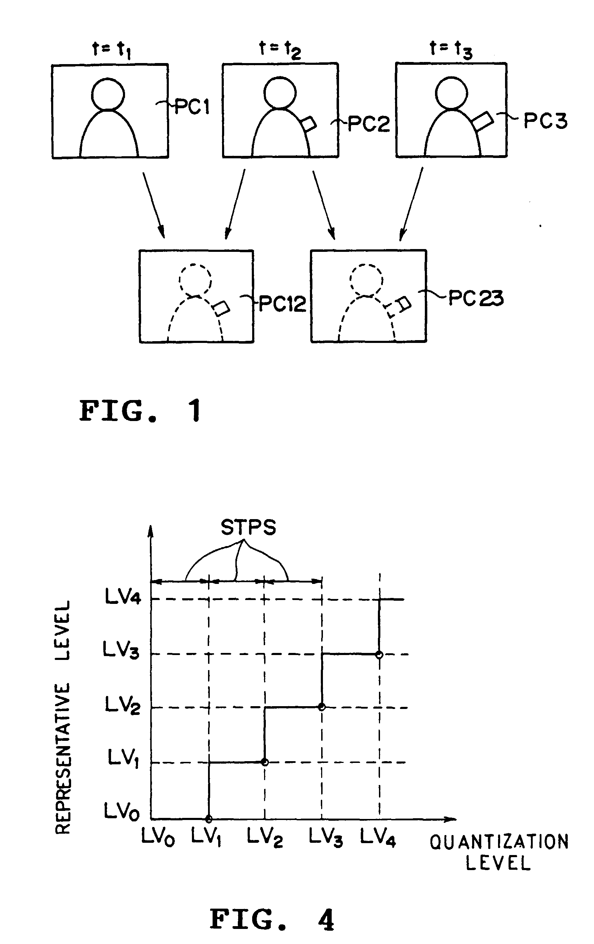

Let's take the picture shown in Fig. 1 as an example, where pictures PC1, PC2, PC3, ..., which constitute a moving picture, are to be transmitted at the time t=t₁, t₂, t₃, .... In the intra-frame coding system, these pictures are coded one-dimensionally on the same line and then transmitted.

On the other hand, the inter-frame coding is carried out to improve compression efficiency by obtaining the video data PC12, PC23, ... which are the differences between the neighboring pictures, i.e, between PC1 and PC2, between PC2 and PC3, and so on, based on the autocorrelation of the video signal on the time axis.

Thus, the video signal transmission system can transmit the pictures PC1, PC2, PC3, ... on a transmission line with the high efficiency coded digital data whose size is extremely small compared to the case that all data of pictures are transmitted.

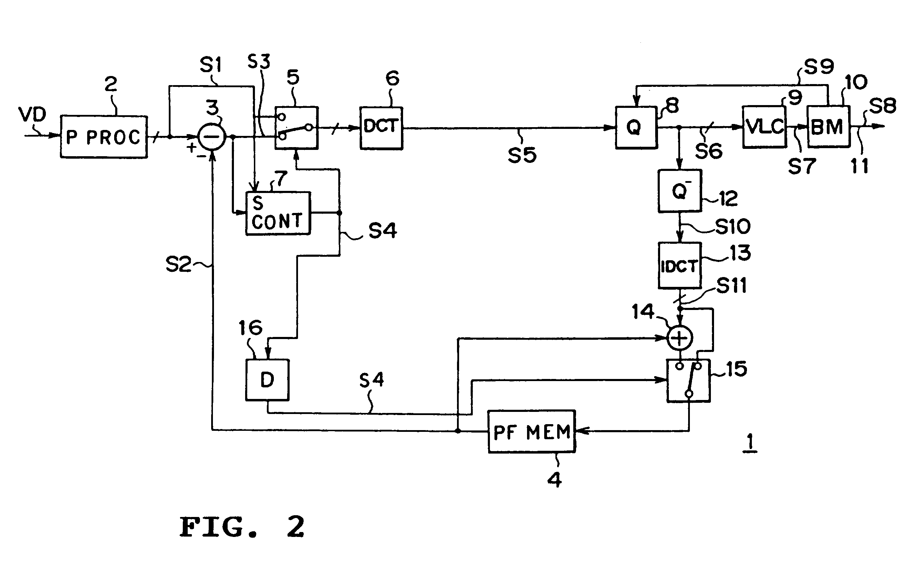

That is, as shown in Fig. 2, in a video-signal-transmission-system 1, a preprocessing circuit 2 processes an input video signal VD by frequency-band limiting, output sequence exchanging and so on to give the input video data S1.

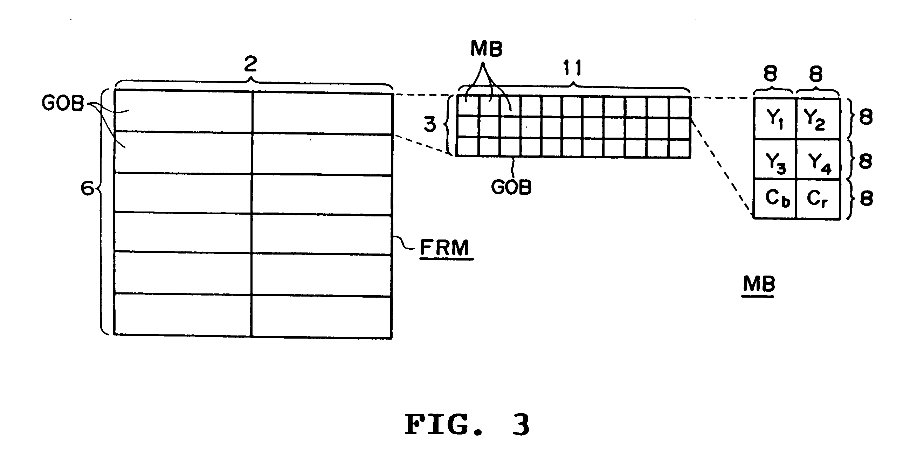

In the above operation, the video data which are sent out sequentially as input video data S1 are extracted from the frame video data FRM by the method shown in Fig. 3.

Video data of one frame FRM are divided into 2 (horizontal) x 6 (vertical) block groups GOB. Each block group GOB includes 11 (horizontal) x 3 (vertical) macro-blocks MB, and each macro-block MB has brightness signals Y₁ through Y₄ for 8 x 8 picture elements and color difference signal data C_{b} and Cᵣ which are composed of color difference signals corresponding to all these picture elements.

In a block group GOB, macro-blocks MB are arrayed in the order of consecutive video data, and macro-blocks are arrayed in a macro-block in the order of raster scanning.

Here, as for brightness signals, each macro-block MB has video data of 16 x 16 picture elements (Y₁ through Y₄) as a unit which are put in the consecutive order in both the horizontal and vertical directions. On the other hand, as for two color differential data corresponding to these picture elements, the amount of the data is compressed and furthermore these data are multiplexed on the time axis, and then the data for 16 x 16 picture elements are allocated to each micro-block Cᵣ and C_{b}.

When both of the input video data S1 and the previous-frame data S2 previously stored in the previous-frame memory 4 are given to the difference-data generation circuit 3, it determines the difference between the input video data S1 and the previous-frame data S2 and generates inter-frame coded data S3 (hereafter, this is called inter-frame coded mode). The difference data S3 are applied to the discrete cosine transformation (DCT) circuit 6 through the switching circuit 5, and to the switching control circuit 7.

The switching circuit 5 is controlled by the control signal S4 which is applied from the switching control circuit 7 so that the input video signal S1 is selected for an output signal in case that it is decided to be possible that intra-field coding would give the less amount of transmission data and so that the difference data S3 is selected for an output signal in case that it is decided to be possible that interframe coding would give the less amount of transmission data.

The discrete cosine transformation circuit 6 performs discrete cosine transformation for the input video data S1 or the difference data S3 of each micro-block based on the two-dimensional correlation of the video signal. Then the transformation data S5 obtained as a result of this transformation is applied to quantization circuit 8.

The quantization circuit 8 quantizes the transformation data S5 with a quantization step size which is determined for each block group GOB. And quantization data S6 which appear at the output terminal as a result of this quantization, are applied to the variable length code (VLC) circuit 9 and the Inverse quantization circuit 12.

Then the variable length code circuit 9 performs variable length coding for the quantization data S6 to convert them to the transmission data S7, which are supplied to the transmission buffer memory (BM) 10.

The transmission buffer memory 10 stores temporarily the transmission data S7 in a memory and then outputs these stored data to the transmission line 11 as the output data S8 with the adequate timing, while it also feeds the quantization control signal S9 back to the quantization circuit 8 depending on the amount of the residual data remaining in the memory in order to control the quantization step size.

Thus, the transmission buffer memory 10 adjusts the amount of data which are generated as the quantization data S6 so that it maintains the proper amount of residual data in the memory (in order to avoid either overflow or underflow).

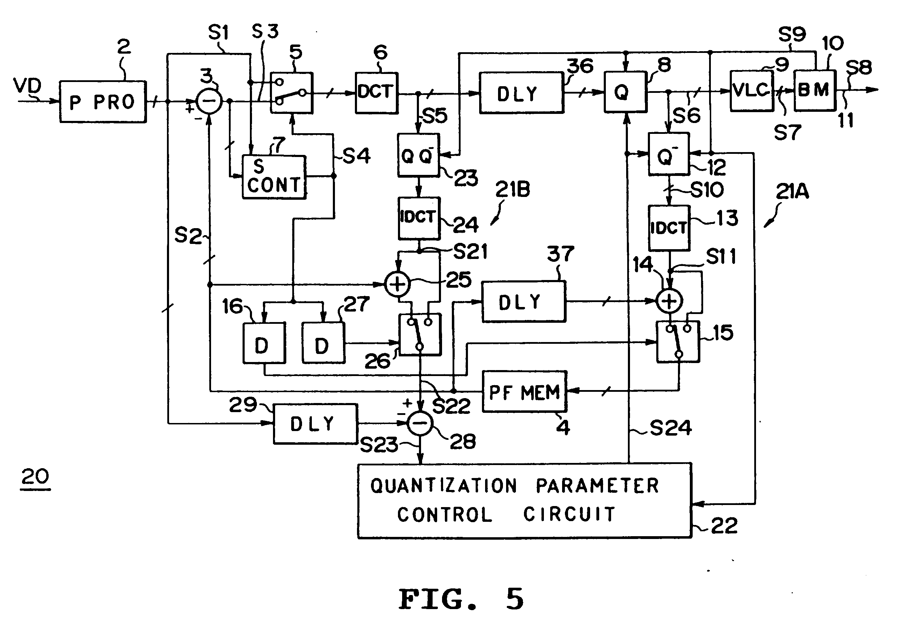

When, incidentally, the amount of the residual data remaining in the transmission buffer memory 10 increases and reaches the maximum allowed amount, the transmission buffer memory 10 sends the quantization control signal S9 to increase the quantization step size STPS (see Fig. 4) so that the amount of quantization data S6 decreases.

When, conversely, the amount of the residual data remaining in transmission buffer memory 10 decreases and reaches the minimum allowed amount, transmission buffer memory 10 sends the quantization control signal S9 to decrease the quantization step size STPS so that amount of quantization data S6 increases.

The inverse quantization circuit 12 performs inverse-quantization for the quantization data S6 received from the quantization circuit 8 to convert them into representative values, i.e., the inverse quantization data S10. Thus the output data S8 are decoded into the transformation data corresponding to such data for which quantization with quantization circuit 8 was not yet carried out. Then the inverse quantization data S10 are applied to the inverse discrete cosine transformation circuit 13.

The inverse discrete cosine transformation circuit 13 transforms the inverse quantization data S10, which are decoded with inverse quantization circuit 12, into the decoded video data S11 by the transformation process which is the inverse of transformation of the discrete cosine transformation circuit 6. And the decoded video data S11 are applied to the previous-frame data generation circuit 14 and the switching circuit 15.

Thus, the inverse discrete cosine transformation circuit 13 provides the decoded data to the transmitter, which are identical to the decoded data which will be obtained in receivers, by decoding the output data S8 to get the data corresponding to the input video data S1 or the differential data S3 which were not yet transformed with the discrete cosine transformation circuit 6.

That is, the inverse discrete cosine transformation circuit 13 reproduces the data identical to the input video data S1 in case that the video signal VD is transmitted with intra-field coding, but in case that the video signal VD is transmitted with inter-frame coding, it reproduces the data identical to the difference data S3.

The previous-frame data generation circuit 14 reproduces the previous-frame video data corresponding to the data which was sent out as the output data S8, by adding the decoded video signal S11 and the previous-frame data S2 which is fed back from the previous-frame memory 4. Then the reproduced video data is sent to the previous-frame memory 4 through the switching circuit 15 and thus the pictures sent to receivers are reproduced sequentially and stored in the previous-frame memory 4.

Switching operation of the switching circuit 15 is controlled by the control signal S4 which is delayed at the delay circuit 16 for the time required for the video signal VD to be completed discrete cosine transformation through inverse discrete cosine transformation.

However, the conventional video transmission systems 1 has the following problems.

The amount of data generated from the quantization circuit 8 for each block group GOB are leveled based on the amount of the residual data remaining in the transmission buffer memory 10, therefore when there exist both types of pattern, the pattern which can be easily distorted and the pattern which is not distorted easily, in the same block group GOB, conspicuous degradation of picture quality occurs in the pattern which can be easily distorted. Therefore, constant picture quality cannot be obtained.

In the case that the amount of transmission information fluctuates drastically at local areas of a picture, for example such as a picture of a rotating-water wheel, a certain block of plural blocks MB constituting block group GOB contains the picture information of both of fine and flat structures, therefore if quantization step size is set to an averaged value, distortion concentrates locally at the block including the vanes of the water wheel and the patterns of the vanes might become dim, or it might be seen distortion with every blocks on the peripheral flat portion.

The discrete cosine transformation system also has a feature that distortion spreads over the whole blocks, therefore distortion depends strongly on the pattern of the picture to be transmitted, and distortion fluctuates. In the high quality picture transmission system, it is important to obtain stable and uniform picture quality independent of the content of the picture to be transmitted, therefore the distortion is a great problem.

There are cases where the distortion of the picture is easily perceivable or imperceivable from the sight of brightness level, due to the linearity in the sight characteristic, for example even if distortion quantity is identical.

The distortion generated based on the sight characteristic is very important in the high quality picture transmission system in which it is desired that the picture quality is uniform independent to the content of the picture to be transmitted.

The distortion of the picture is not only imperceivable at edge portions of the picture but also easily perceive at flat portions of the picture.

For this, there was a problem that the distortion of the flat portions is more perceivable than the distortion of the edge portions in the picture having the flat portions and the end portions admixed, when quantity of information data to be generated is controlled so that distribution of the picture distortion generated on the picture to be transmitted is simply uniform.

European Published Patent Application EP-A-0424060 discloses a video coding system utilizing discrete cosine transformation, quantization and variable length coding.

In view of the foregoing, an object of this invention is to provide a video signal transmission. system which can transmit picture signals having uniformity in picture quality over whole picture, even if radically varied input pictures which are admixed of pictures capable of producing distortion and pictures
not capable of producing distortion.

Another object of the invention is to provide a video signal transmission system in which distortion of flat portion easily perceived is not concentrated to yield an improvement of the transmission picture in quality.

According to one aspect of this invention there is provided a video signal transmission apparatus for orthogonally transforming a video signal of unit block groups, each having a plurality of unit blocks, into coefficient data and then quantizing said coefficient data into quantization data, characterised by:
a local decoding means for quantizing and inverse-quantizing said coefficient data with a first quantizing means based on first quantization information determined for each of said unit block groups, and performing inverse-orthogonal transformation to generate local decoded data;
a difference data detecting means for detecting the difference between said local decoded data decoded by said local decoding means and the original video signal corresponding to said local decoded data;
a controlling means for determining second quantization information for each of said unit blocks based on the difference detected by said difference data detecting means; and
a second quantizing means for quantizing said coefficient data based on said first quantization information and said second quantization information.

According to another aspect of this invention there is provide a video signal transmission method for orthogonally transforming a video signal of unit block groups, each having a plurality of unit blocks, into coefficient data and then quantizing said coefficient data into quantization data, characterised by the steps of:
quantizing and inverse-quantizing said coefficient data based on first quantization information determined for each said unit block group, and performing inverse-orthogonal transformation to generate local decoded data;
detecting the difference between said local decoded data and the original video signal corresponding to said local decoded data;
determining second quantization information for each said unit block based on said difference; and
quantizing said coefficient data based on said first quantization information and said second quantization information.

The nature, principle and utility of the invention will become more apparent from the following detailed description when read in conjunction with the accompanying drawings in which like parts are designated by like reference numerals or characters.

Embodiments of the invention will now be described, by way of example only, with reference to the accompanying drawings in which:
Fig. 1 is a schematic representation for explaining intra-frame and inter-frame coding;
Fig. 2 is a block diagram of a conventional video data transmission system;
Fig. 3 is a schematic representation showing constitution of video data of a frame;
Fig. 4 is a schematic representation for explanation of quantization steps;
Fig. 5 is a block diagram of one video data transmission system embodying the present invention;
Fig. 6 is a block diagram showing the quantization parameter control circuit of Fig. 5.
Fig. 7 is a block diagram of a video data transmission system for another embodiment;
Fig. 8 is a block diagram of a quantization parameter control circuit of Fig. 7;
Fig. 9 is a block diagram of a video data transmission system for another embodiment;
Fig. 10 is a schematic representation for explaining the expectation of flatness with flatness expectation circuit of Fig. 9; and
Fig. 11 is a block diagram for explanation of quantization parameter control circuit of Fig. 9.

Fig. 5 shows the video data transmission system 20 which has the same constitution as that shown in Fig. 2 and like parts are designated by like reference numerals in Fig. 2: except for
the first local decoding circuit block group 21A comprising the inverse quantization circuit 12, the inverse discrete cosine transformation circuit 13, and the previous-frame data generation circuit 14;
the second local decoding circuit block group 21B; and
the quantization parameter control circuit 22 which controls quantization parameters of each block of the pictures to be transmitted based on the decoding results given by the first and second local decoding circuit block group 21A and 21B.

The second local decoding circuit block group 21B detects the distortion of the transformation data S5 compared with the original video data before the transformation data S5 are actually quantized with the quantization circuit 8, by decoding the transformation data S5 which is the output from the discrete cosine transformation circuit 6.

In the above operation of the second local decoding circuit system 21B, the transformation data S5 from the discrete cosine transformation circuit 6 are applied to quantization/inverse-quantization circuit (QQ⁻) 23 which comprises read only memory.

With discrete cosine transformation circuit 6, coefficients of the data which are transformed by discrete cosine transformation are quantized (i.e., classified) based on the quantization performance determined by the quantization control signal S9 for each block group GOB which is fed back from the transmission buffer memory 10, and then converted by inverse quantization (i.e., converted into representative values) and applied to the inverse discrete cosine transformation circuit 24.

The inverse discrete cosine transformation circuit 24 transforms the representative values by inverse discrete cosine transformation to get the inverse transformation data S21, which are applied to the addition circuit 25 and the switching circuit 26.

Then, the addition circuit 25 adds the inverse transformation data S21 to the local decoding data S2 of the previous frame stored in the previous-frame memory 4 so that the video data which would be transmitted with quantization step size which would be determined by the quantization control signal S9, is decoded and applied to the switching circuit 26.

The switching circuit 26 is controlled by the control signal S4 with the delay at delay circuit 27 for the time needed for the second local decoding circuit block group 21B to perform the signal processing for the video data from the discrete cosine transformation circuit 6 through the inverse discrete cosine transformation 24, so that the proper local decoding data S22 is selected to apply to the distortion calculation circuit 28 depending on whether the present video data to be transmitted on transmission line 11 are encoded by inter-filed coding or by inter-frame coding.

The distortion calculation circuit 28 calculates the magnitude of distortion for the same sample by calculating the difference between the original input video data S1 received from the delay circuit 29 and the local decoding data S22 received from the switching circuit 26, then the calculated magnitude, distortion data S23, is sent to the quantization parameter control circuit 22.

The delay circuit 29 is constituted by FIFO (first in first out) memory and it makes the original input video data S1 delayed for the time needed for the input video signal S1 to be processed with from the discrete cosine transformation circuit 6 through the local decoding circuit 21B.

The quantization parameter control circuit 22 sends the quantization control signal S24 to the quantization circuit 8 to control the quantization step size for each block of the video data to be transmitted based on the distortion data S23 received from the distortion calculation circuit 28 and on the quantization control signal S9 for each block group GOB received from the transmission buffer memory 10.

Thus, the quantization parameter control circuit 22 can locally control the local quantization step size for each block before the video data are actually transmitted, to the extent that it does not affect smoothing of the amount of generated information of the video data.

Hence, even for blocksin the same block group GOB, the quantization step size can be reduced for a block which has a large distortion and, in contrast, the quantization step size can be increased for a : block which has a small distortion, so that high picture quality of the video signal to be transmitted is maintained.

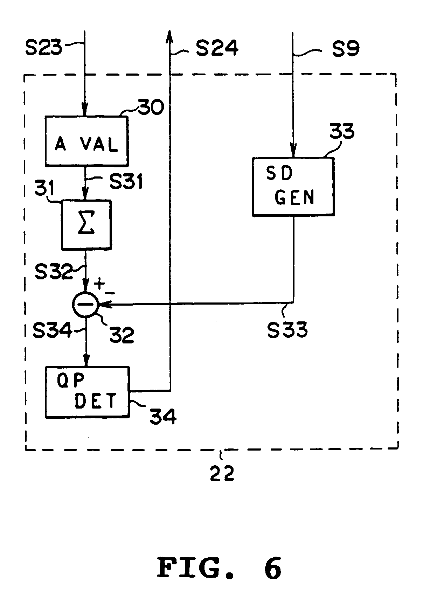

That is, in the quantization parameter control circuit 22, as shown in Fig. 6, the distortion data S23 received from the distortion calculation circuit 28 is applied to the absolute value circuit 30 to determined the absolute value of distortion with respect to the original video data S1, and then this value is sent out as the absolute difference data S31.

The integration circuit 31 calculates the sum of the absolute difference data S31 received from the absolute circuit 30 for each block then supplies the calculated value to the subtraction circuit 32 as the integral distortion data S32.

The subtraction circuit 32 calculates the difference between the integral distortion data S32 and the standard distortion data S33 received from the standard distortion generation circuit 33 comprising read only memory and the like. And the calculated difference data S34 are sent to the quantization parameter determination circuit 34.

In the above operation, the standard distortion generation circuit 33 predicts previously the typical or average value of the sum of the absolute values of distortion which would occur in each block, based on the control parameters for each block group GOB which are received as the quantization control signals S9 from the transmission buffer memory 10. This predicted value is output as the standard distortion data S33.

The quantization parameter determination circuit 34 sends the control parameter, control data S34, which determines the quantization step size for each block to minimize the difference data S34, which is the difference between the integral distortion data S32 and the standard distortion data S33, to the quantization circuit 8 and the inverse quantization circuit 12 so that picture quality is maintained almost constant while the video data, which corresponds to the block group GOB processed with the second local decoding circuit block group 21, is being transmitted on transmission line 11.

The first local decoding circuit block group 21A performs inverse quantization for the quantization data S6 based on the quantization control data S9, which is quantization parameters determined for each block group GOB, and based on the quantization control data S24, which is quantization parameters determined for each block.

Incidentally, in the video data transmission system 20, the transformation data S5 from the discrete cosine transformation circuit 6 is applied to the quantization circuit 8 with the adequate delay given by delay circuit 36 comprising FIFO memory.

In the above operation, the delay circuit 36 makes the transformation data S5 delayed for the time needed for signal processing of the video data with the second local decoding circuit block group 21B and the quantization parameter control circuit 22, that is, the time needed signal processing with the quantization/inverse-quantization circuit 23 through to the quantization parameter determination circuit 34. Then the delayed data is applied to the quantization circuit 8. Thus, the video data transmission system 20 can achieve feedforward operation based on the content of the picture to be transmitted.

Furthermore, in the video data transmission circuit 20, the previous-frame data S2 supplied from the previous-frame memory 4 are applied to the previous-frame data generation circuit 14 in the first local decoding circuit block group 21A, with the delay at the delay circuit 37 comprising FIFO memory.

In the above operation, the delay circuit 37 makes the previous-frame data delayed for the time needed for signal processing by the second local decoding circuit block group 21B and the quantization parameter control circuit 22. As a result of this, the previous-frame data which was already transmitted on transmission line 11 can be decoded.

Let's take, as an example, a picture of a water wheel with the sky in the background. When the video signal VD of the block group GOB which corresponds to the boundary between the background which is not degraded easily and the vanes of the wheel which might be easily degraded, is applied to preprocessing circuit 2, then preprocessing circuit 2 converts the video signal VD to the 8-bit input video data S1 and supplies this converted data to the difference-data generation circuit 3 and the delay circuit 29.

The difference-data generation circuit 3 determines the inter-frame difference data S3, i.e., the difference between the present input video data S1 applied from preprocessing circuit 2 and the previous-frame data of corresponding block group supplied from the previous-frame memory 4. Then, for this data S3, 2-dimensional discrete cosine transformation is carried out for each block with the discrete cosine transformation circuit.

The transformed data S5 from the discrete cosine transformation circuit 6 gets delayed at the delay circuit 36 for the time needed for the second local coding circuit block group 21B and the quantization parameter control circuit 22 to perform signal processing for the transformation data S5, then the delayed data is supplied to the quantization circuit 8.

While the delay circuit 36 is making transformation data S5 delayed before quantization, the second local quantization circuit block group 21B and the quantization parameter control circuit 22 determine the quantization step size for each unit block constituting block group GOB to be transmitted, depending on whether that block corresponds to the background which is not degraded easily or corresponds to the boundary between the background and vanes of the water wheel which might be degraded easily.

That is, in the second local decoding circuit 21B, with the quantization/inverse-quantization circuit 23, the transformation data S5 is quantized by quantization control signal S9 which determines the quantization step size for block group GOB, and, furthermore, inverse quantization is carried out for that quantized data to generate the representative value. Then, this representative value is transformed with the inverse discrete cosine transformation circuit 24.

Furthermore, in the second local quantization circuit block group 21B, the local decoding circuit 25, utilizing the local decoded values of the previous frames, gets the local decoded value of the present frame with the,quantization accuracy determined for each block group GOB, then the obtained local decoded value is supplied to the distortion calculation circuit 28 through the switching circuit 26. The distortion calculation circuit 28 calculates the difference between the decoded data S22 of the present block group and the original video data S1. And the obtained difference, distortion data S23, is applied to the quantization parameter control circuit 22.

In the quantization parameter control circuit 22, the absolute value circuit 30 determines the absolute value of the distortion data S23, then the summation of the absolute values of the distortion for each block is calculated with the integral circuit 31. Thus, deviation of the decoded value of each block from the original video data, which would occur if the present quantization step size is utilized, is calculated.

Meanwhile, in the quantization parameter control circuit 22, the standard distortion generation circuit 33 predicts the magnitudes of distortion which might occur for each block based on the quantization control data S9 which is such a control parameter to determine the quantization size for each block group GOB that neither overflow nor underflow occurs for the data stored in the transmission buffer memory 11, and the predicted value is applied to subtraction circuit 32.

Then, the subtraction circuit 32 in the quantization parameter control circuit 22 calculates the difference between the magnitude of actual distortion and that of the standard distortion data S33. This calculated difference data S34 is applied to the quantization parameter determination circuit 34.

The quantization parameter determination circuit 34, judging from the fluctuation in the difference data S34, distinguishes whether or not the amount of information for each block increases locally with respect to the amount of information which is predicted based on the average quantization step size for each block group GOB.

For example, when a block group GOB has a lot of blocks corresponding to the background pattern, there exists a small distortion, hence the quantization step size is set large by transmission buffer memory 10. On the other hand, the block corresponding to the boundary between the water wheel and the background has large distortion, therefore large magnitude of distortion occurs with respect to the magnitude of distortion predicted based on the present quantization step size.

In such a case, the quantization parameter determination circuit 34 reduces the quantization step size for corresponding blocks to decrease the distortion to the extent that neither overflow nor underflow occurs for the data in the transmission buffer memory 10, and supplies the quantization control signal S24 to the quantization circuit 8 and the inverse quantization circuit 12 in order to set the control parameters adequately for each block so that no degradation in picture quality occurs at the boundary between the water wheel and the background.

After that, the quantization circuit 8 controls the quantization step size for each block which constitutes the block group GOB based on the quantization parameters which were previously calculated for each block group GOB and each block while the video data of block group GOB were delaying at the delay circuit 36, then supplies it to variable length coding circuit 9. And then variable length coding is carried out and the data is transmitted on transmission line 11 through transmission buffer memory 10.

At the same time, the inverse quantization circuit 12 in the first local decoding circuit block group 21A performs inverse quantization for the quantization data S6 utilizing the actual quantization step size determined by the quantization control signal S9 and S24. Thus the video data which was transmitted actually is decoded in the transmitter and stored in the previous-frame memory 4. And then, the operations are repeated in the similar way.

With the above constitution, local decoding of the video signal is carried out before the video signal is actually quantized and transmitted, and the locally decoded value is compared with the original video data to determine the magnitude of distortion for each block. Based on this distortion magnitude, the quantization step size is controlled locally for each block so that averaging of the amount of information generated for entire block group GOB is more easily achieved and local degradation in picture quality is avoided even in the case that the amount of local information changes drastically in the same block group.

In the above operation, the summation, for the same block group, of the magnitude of distortion generated in each block can become almost same as the preliminary predicted magnitude of standard distortion so that irregular distribution of distortion in the block group can be effectively avoided.

In the embodiment described above, the quantization parameter control circuit 22 utilizes the absolute value of the difference data S23 between the locally decoded video data S22 and the corresponding original input video data S1. However, this invention is not limited to that, but the sum of squares of the difference data S23 can be utilized. Or nonlinearly weighted values, etc., can be also utilized.

Furthermore, in the above embodiment, the quantization parameter control circuit 22 predicts the sum of the absolute values of the magnitude of standard distortion for each block based on the quantization control signal S9 which is the quantization control parameter for each block group GOB, however this invention is not limited to that but the prediction of the sum of squares of the magnitudes of standard distortion, etc., can be successfully applicable.

Furthermore, in the above embodiment, the quantization parameter control circuit 22 has the constitution as shown in Fig. 6, however this invention is not limited to that but various kinds of circuits are applicable which control the quantization parameter for each block based on the quantization control signals comprising difference data S22, which is the difference between the input video signal of the original input video data S1 and the local decoded video data S22.

In the above embodiment, the picture of a water wheel with the sky in the background is taken as an examples of video signal to be transmitted, however this invention is not limited to that but this invention is suitable for transmittitting any other pictures whose amounts of data change drastically.

In the embodiment described above, the quantization parameters are controlled for each block based on the difference data S22, which is the difference between the original input video data S1 and the local decoded video data S22, and based on the quantization control signal S9 which comprises the control parameter for each block group GOB, however this invention is not limited to that but the object can be achieved by controlling characteristics of filters, etc.

Furthermore, in the embodiment described above, the quantization parameters are controlled for each block based on the difference data S22, which is the difference between the original input video data S1 and the local decoded video data S22, and based on the quantization control signal S9 which comprises the control parameter for each block group GOB, however this invention is not limited to that but this invention is applicable for the wide varieties of the systems which utilize various kinds of signal processing for the video data to be transmitted.

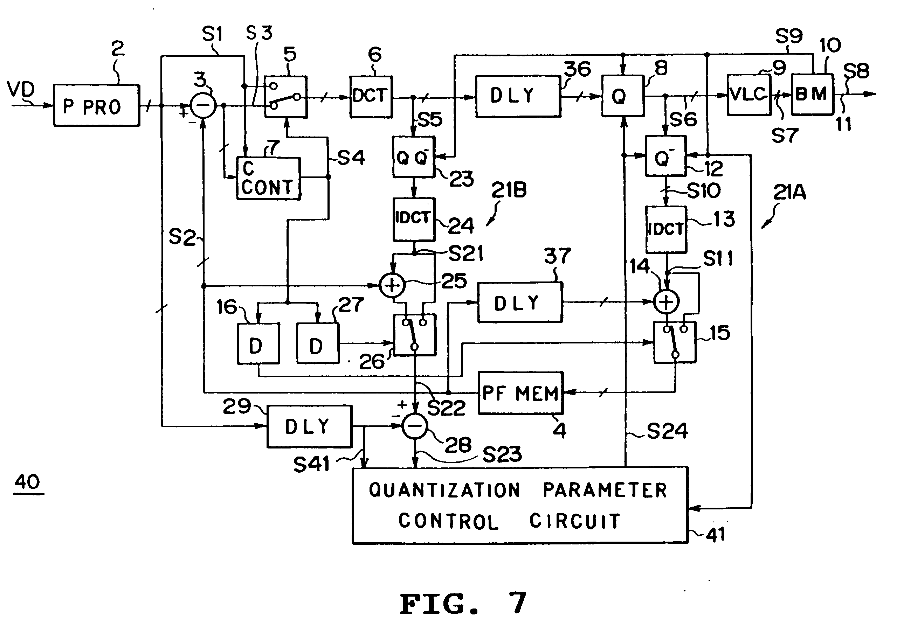

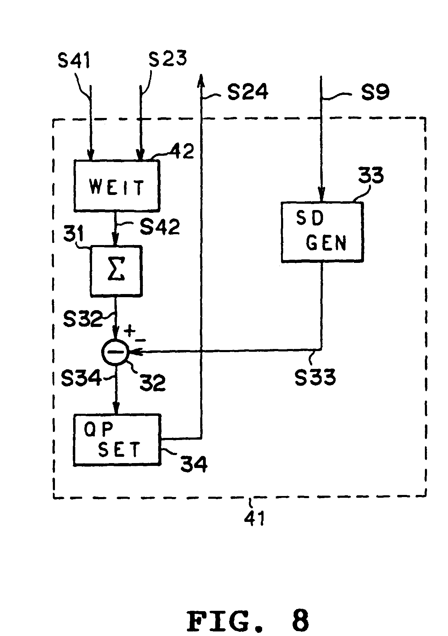

Furthermore in the above embodiment, as shown in Figs. 5 and 6, the picture data transmission system 20 and the quantization parameter control circuit 22 weights the picture data, however this invention is not limited to that but this invention is applicable for a picture transmission system 40 and a quantization parameter control circuit 41 as shown Figs. 7 and 8 in which like parts are designated by like reference numerals or characters in conjunction with Figs. 5 and 6.

The quantization parameter control circuit 41 is input the distortion data S23 from the distortion calculation circuit 28 and the brightness signal S41 of the original signal from the delay circuit 29.

The quantization parameter control circuit 41 has a weighting circuit 42 which is constituted by ROM, etc. and weights the distortion data with the brightness signal 41 to output absolute weighted distortion data as the weighted difference data S42 to the integration circuit 31.

Here, the weighting circuit 42 weights nonlinearly the distortion data S24 to fit for eyesight characteristic of humans.

In this embodiment, a standard distortion generation circuit 33 predicts standard or average absolute summation of distortion which would occur in each block in typical brightness signal level, based on the control parameter with each block group GOB which is input as the quantization control signal S9 from the transmission buffer memory 10, so as to output as the standard distortion data S33.

When the distortion summation data S32 is larger than the standard distortion data S33, the quantization parameter determination circuit 34 outputs the control data so that quantization accuracy is improved. On the contrary, when the distortion summation data S32 is smaller than the standard distortion data S33, the quantization parameter determination circuit 34 outputs the control data so that quantization accuracy is degraded.

Therefore the picture transmission system 40 realizes uniformity of the distortion with eyesight characteristic of humans, whereby information volume can be used more effectively and high quality picture transmission can be realized.

Moreover in the embodiment above described, the weighting circuit 42 weights non-linearly the distortion data S23, however this invention is not limited to that but may weight linearly.

Moreover, in the embodiment above described, the brightness signal is input with all bits thereof, however this invention is not limited to this but may be input 3 through 5 bits of most significant bit side of the brightness signal.

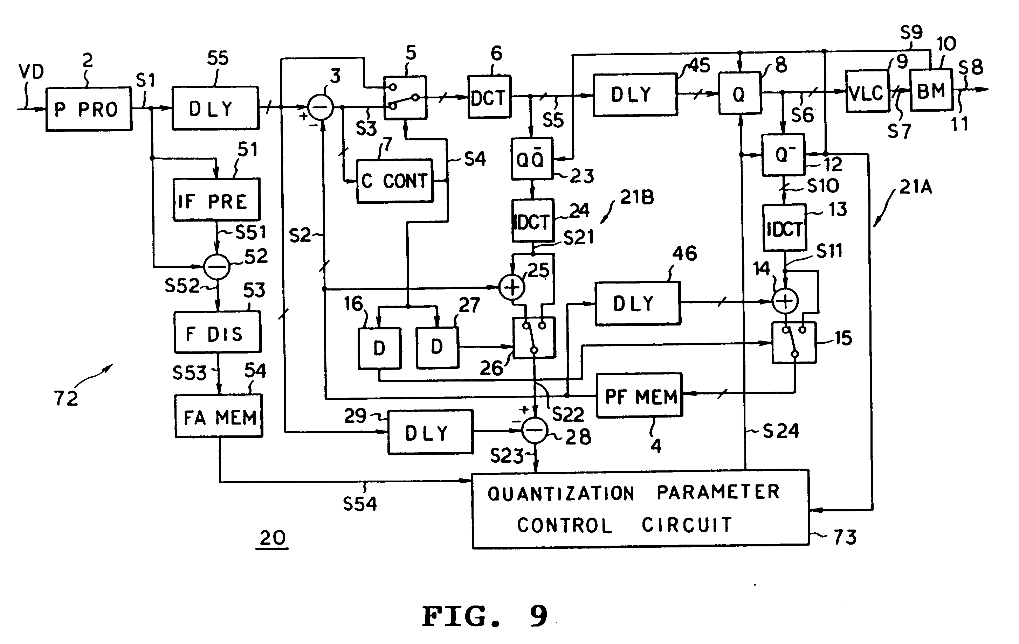

In Fig. 9 in which like parts are designated by like reference numerals or characters in conjunction with Fig. 5, the quantization parameter control cireuit has same construction as Fig. 5, excepting that the quantization parameter of each black of transmission picture is controlled based on the output result output from a flatness discrimination circuit block 72.

The flatness discrimination circuit block group 72 is constituted so that it determines the flatness of transmission data and supplies the result to quantization parameter control circuit 73. In this circuit block group, the original input video data S1 received from the preprocessing circuit 2 are successively applied to intra-field flatness prediction circuit 51.

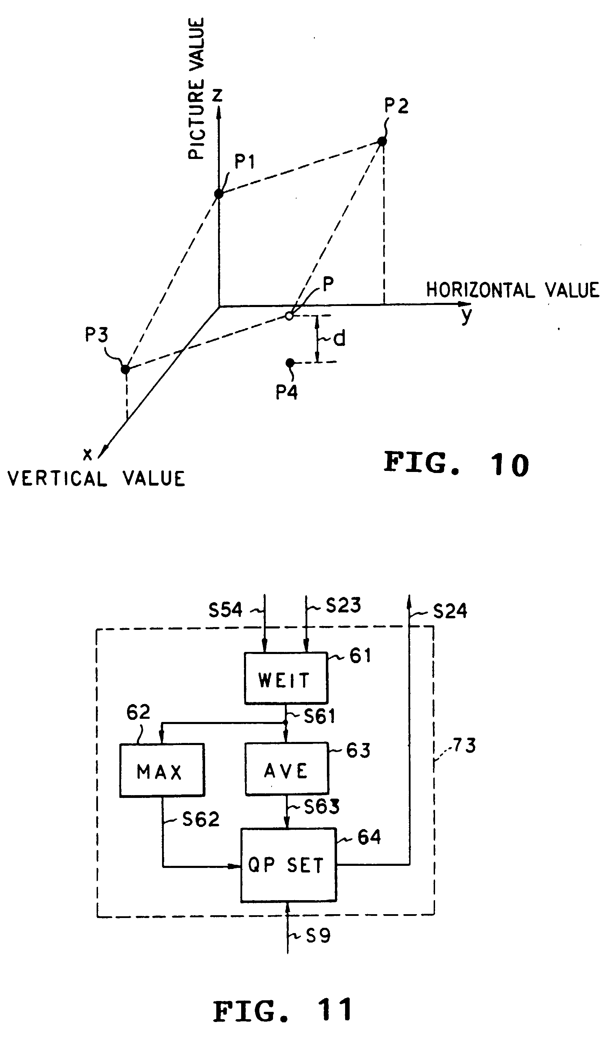

The intra-field flatness prediction circuit 51 is constituted so that it determines the 3-dimensional data, (x₁, y₁, z₁), (x₂, y₂, z₂) and (x₃, y₃, z₃) corresponding to three picture elements, P1, P2 and P3 respectively which exist in the same field (see Fig. 10).

The intra-field flatness prediction circuit 51 is constituted so that it determines the 3-dimensional predicted data, (x₄₀, y₄₀, z₄₀) , of predicted picture element P (denoted by small circle in Fig. 10) from the 3-dimensional data, (x₁, y₁, z ₁), (x₂, y₂, z₂) and (x₃, y₃, z₃), assuming that the fourth picture element P4 which is to be transmitted after the first through third picture element, P1 through P3, is located on the same plane on which these three picture elements, P1 through P3 are located. This predicted data is applied as predicted picture element data S51 to prediction error discrimination circuit 52.

In the above operation, predicted data, (x₄₀, y₄₀, z₄₀), of predicted picture element P is described by the following equation.${\text{(x}}_{\text{40}} {\text{, y}}_{\text{40}} {\text{, z}}_{\text{40}} {\text{) = (x}}_{\text{2}} {\text{, y}}_{\text{2}} {\text{, z}}_{\text{2}} \text{)} {\text{+ (x}}_{\text{3}} {\text{, y}}_{\text{3}} {\text{, z}}_{\text{3}} {\text{) - (x}}_{\text{1}} {\text{, y}}_{\text{1}} {\text{, z}}_{\text{1}} \text{)}$ That is, the first through third picture elements, P1 through P3, and the predicted picture element, P, constitute a parallelogram. Components of 3-dimensional data (x, y, z) show horizontal and vertical positions in the field and picture element value at that point respectively.

Getting the picture element value, z₄, of the fourth picture element, P4, corresponding to predicted picture element P from input video data S1, prediction error discrimination circuit 32 determines the difference, d (= z₄₀ - z₄), between picture element value z₄ of the fourth picture element P4 and picture element value z₄₀ of predicted picture element P. This predicted error d, i.e., the error between predicted value z₄₀ and the original picture element value, z₄, is applied as predicted error data S52 to the flatness discrimination circuit 53.

The flatness discrimination circuit 53 is constituted by ROM (read only memory) and it determines the absolute value of predicted error data S52 received from prediction error discrimination circuit 52 and judging from this absolute value, it discriminates the flatness of picture to be transmitted and classifies the flatness into 4 levels, "flat", "almost flat", "slightly flat" and "not flatness, which are assigned to 2-bit discrimination data S53, "11" through "00" respectively. This discrimination data S53 is applied to a flat area memory 54.

The flat area memory 54, having two bank memories which can store the data corresponding to 8 lines of the picture to be transmitted, stores successively discrimination data S53 which indicates the flatness at each picture element of the original input video data S1, and supplies stored data S54 to the quantization parameter control circuit 73 with adequate timing.

Delay circuit 55 is constituted so that it can send the original input video data S1 to the difference data generation circuit 3 with the adequate delay time in order to enable the quantization parameter control circuit 73 to process the picture element data corresponding to stored data S54.

The quantization parameter control circuit 73 is constituted so that it sends the quantization control signal S24 for each block to the quantization circuit 8, based on the distortion data S23 received from the distortion calculation circuit 28, the stored data S54 received from the flat area memory 54, and the control data S9 for each block group GOB received from the transmission buffer memory 10.

In the quantization parameter control circuit 73, as shown in Fig. 11, the distortion data S23 and the stored data S34 are applied to a weighting circuit 61, so as to weight distortion data S23 by the stored data S54 for each picture element. Weighted distortion data S61 is applied to a maximum circuit 62 and an average circuit 63.

In this way, even in the case that distortion with respect the original picture occurs uniformly, the weighting circuit can perform heavier weighting for the data corresponding to the flat area of the picture to be transmitted where the distortion can be easily perceived.

The maximum circuit 62 and the average circuit 63 determine the maximum and average value of the weighted distortion data S61 respectively, and supply these values to a quantization parameter setting circuit 64.

The quantization parameter setting circuit 64, based on the maximum data S62 from the maximum circuit 42, the average data S63 from the average circuit 63, and the quantization control signal S9 from transmission buffer memory 10, sets the control parameter for each block which determines the quantization step size for each block, and sends out the set data as control data S24.

Thus, the quantization parameter setting circuit 64 reduces the quantization step size, when the amount of information of the video data corresponding to the block group GOB processed with second local coding circuit block group 21B increases or when the amount of information is being kept constant but the data corresponds to the area, such as flat area, whose distortion can be easily perceived, so that the picture quality of the video data to be transmitted on the transmission line 11 can be kept fairly constant.

Inverse quantization circuit in the first local decoding circuit block group 21A performs inverse quantization for quantization data S6 based on quantization control data S9 which is the quantization parameter for each block group GOB and based on quantization control data S24 which is the quantization parameter for each block.

Incidentally, in the video data transmission system 20, the transformation data S5 from the discrete cosine transformation circuit 6 is applied to quantization circuit 8 with the adequate delay time at delay circuit 45 comprising FIFO memory.

In the above operation, the delay circuit 45 gets the coefficient data S5 delayed for the time needed for second local decoding circuit block group 21B to finish local decoding of at least one block and the time for the quantization parameter setting circuit 64 to determine the quantization parameter for each block. Then the delayed data is applied to the quantization circuit 8. Thus, the quantization circuit 8 is enabled to perform quantization for a required block, using control data S24.

Furthermore, in video data generation circuit 20, the previous-frame data generation circuit 14 receives previous-frame data S2 from previous-frame memory 4 through delay circuit 46.

In the above operation, delay circuit 46 gets the previous-frame data delayed for the time needed for second local decoding circuit block group 21B quantization parameter control circuit 23 to perform their processing. Then the delayed data is sent out. Thus, the data of the previous-frame which has been already sent out on transmission line 11 can be decoded.

In the above constitution of the video data transmission system 20, the preprocessing circuit 2 successively converts input video signal VD into 8-bit input video data S1, and supplies the converted data to the delay circuit 55 and the flatness discrimination circuit block group 22.

The difference-data generation circuit 3 determines the inter-frame difference data, S3, i.e., the difference between the data of the present frame received from the delay circuit 55 and the data of corresponding block group GOB of the previous frame supplied from the previous-frame memory 4. Then, for this difference data S3, 2-dimensional discrete cosine transformation is carried out for each block with the discrete cosine transformation circuit 6.

The delay circuit 45 gets the transformation data S5 delayed for the time needed for the second local coding circuit block group 21B and the quantization parameter control circuit 23 to perform processing for the transformation data S5, then the delayed data is supplied to the quantization circuit 8.

While the delay circuit 45 is getting the transformation data S5 for block group delayed before quantization, the second local quantization circuit block group 21B and the quantization parameter control circuit 73 determine the quantization step size for each unit block constituting block group GOB to be just transmitted, depending on whether or not that block is such a block where distortion easily occurs.

That is, in the second local decoding circuit 21B, the quantization/inverse-quantization circuit 23 quantizes the transformation data S5 using the quantization control signal S9 and, furthermore, perform inverse quantization for that quantized data to generate the representative value. Then, the inverse discrete cosine transformation circuit 23 performs inverse transformation for that representative value.

Furthermore, the local decoding circuit 25 gets the local decoded value of the present frame, utilizing the decoded value of the previous frame for each block group GOB. Then the obtained local decoded value is supplied to the distortion calculation circuit 28 through the switching circuit 26. The distortion calculation circuit 28 calculates the difference between the decoded data S22 and the original input video data S1 to be transmitted. And the obtained difference, distortion data S23, is applied to the quantization parameter control circuit 73.

While the second local coding circuit block group 21B is performing the above processing, the flatness discrimination circuit block group 72 decides whether or not the picture to be transmitted, which is under the processing with second local coding circuit block group 21B, is flat pattern whose distortion is easily perceived.

In the flatness discrimination circuit block group 72, receiving the original input video data S1, the intra-field flatness prediction circuit 51 takes location of the remaining vertex of the parallelogram defined by three picture elements, P1, P2 and P3 located in the same field as the location of the predicted picture element P. Thus, 3-dimensional predicted picture element data (x₄₀, y₄₀, z₄₀) is determined and is applied as the predicted picture element data S51 to the predicted error discrimination circuit 52.

The predicted error discrimination circuit 52 determines the predicted error d, which is the difference between picture element value z₄₀ of the predicted picture element data and the picture element value of the fourth picture element P4 in the video data to be actually transmitted. Then the flatness is discriminated for each picture element based on predicted error d and represented with the 2-bit code to be successively stored in the flat area memory 54. These stored data are applied to quantization parameter control circuit 73.

In the quantization parameter control circuit 73, weighting circuit 61 weights the distortion data S23 by stored data S54 for each picture element, in other words, it weights them depending on the degree of the ease to perceive the distortion, defined as the difference between the decoded value of each block and the original video signal value, which actually occurs under the condition of the current quantization step size. Even in the case that the amount of information locally increases and large distortion occurs under the condition of the quantization step size given for the entire block group, light weighting is carried out for the picture elements whose distortion is not easily perceived.

In contrast, even in the case that not so large distortion occurs, heavy weighting is carried out for the picture elements in the flat area whose distortion can be easily perceived.

After that, the quantization parameter setting circuit 64 defines the quantization step size for each block, based on the maximum and average data (S62, S63) of weighted distortion which are determined for each block. Thus control data S24 is determined and sent out.

For example, in the case that the amount of information locally increases and the nearly same magnitude of distortion occurs for each block of the picture to be transmitted, the smaller quantization step size is set for the flat area whose distortion can be easily perceived and the current step size is kept for the pattern whose distortion can not be easily perceived.

In this way, the more amount of information is allocated just for the pattern whose distortion can be easily perceived, therefore more effective utilization of information can be achieved.

Finally, based on the quantization parameter which was determined preliminary before the present video data of the block group is actually transmitted, the quantization circuit 8 changes the quantization step size to give the optimum step size for each block composing block group, and sendsthe data to the variable length coding circuit 9. The data are sent out through the transmission buffer memory 10 to the transmission line 11.

At the same time, the inverse quantization circuit 12 in the first local decoding circuit block group 21A performs inverse quantization for the quantization data S6 utilizing the actual quantization step size determined by the control data S24. Thus the video data which was transmitted actually is reproduced in the transmitter and stored in the previous-frame memory 4.

With the above constitution, local decoding of the video signal is carried out before the video signal is actually quantized and transmitted, and the locally decoded value is compared with the original input video data to determine the magnitude of distortion. Furthermore, the magnitude of the distortion is weighted depending on the degree of ease to perceive the distortion. Based on this weighted distortion magnitude, the quantization step size is controlled locally to get better picture quality even in the case that the amount of information changes locally and drastically.

In the above embodiment, the plane expectation for each picture element in a field is carried out based on the equation (1), however the this invention is not limited to that, but another condition may be utilized for the plane expectation.

Furthermore, in the above embodiment, expected picture element P is obtained by one plane expectation, however this invention is not limited to that but the plural times of plane expectation can lead to the better prediction accuracy of predicted picture element P.

Furthermore, in the above embodiment, the picture is considered to be plane when predicted picture element P coincides with original picture element P4, however this invention is not limited to that but the picture may successfully be considered to be plane when original picture element P4 is located in the adequately given region near the predicted picture element P.

In the above embodiment, the flatness discrimination circuit 53 utilizes the absolute value of the predicted error d as a value to show the degree of flatness, however this invention is not limited to that but it can utilize the square of the predicted error d, non-linear function of the predicted error d, and so on.

In the embodiment described above, the flatness discrimination circuit 53 is composed by read only memory, however this invention is not limited to that but the flatness for each picture element can be obtained by another calculating process.

Furthermore, in the above embodiment, the flatness of video data is described by 2-bit data, however this invention is not limited to that but it can be described by 1-bit or plural bit data.

Furthermore, in the above embodiment, flat area memory 54 is composed by 2 sets of memory which can store the data for 8 lines, however this invention is not limited to that but it can be composed to that they can store the data for 16 lines, one field, and so on.

Furthermore, in the above embodiment, weighting circuit 61 is composed by read only memory, however this invention is not limited to that but it can be composed by a multiplier, etc.

Furthermore, in the above embodiment, weighting circuit 61 weights linearly distortion data S23 by stored data S54, however this invention is not limited to that but it can weight non-linearly the data.

Furthermore, in the above embodiment, the quantization parameter setting circuit 64 sets quantization parameter for each block based on the maximum data S62 and the average data S43, however this invention is not limited to that but it can set quantization parameter based on either of them or based on the standard deviation of the data.

Furthermore, in the above embodiment, quantization parameter control signal S9 is fed back from the transmission buffer memory 10 to the quantization parameter control circuit 23, however this invention is not limited to that but quantization parameter can be set for each block only based on distortion data S23 and stored data S54 with no feedback of quantization control signal S9.

While there has been described in connection with the preferred embodiments of the invention, it will be obvious to those skilled in the art that various changes and modifications may be made therein without departing from the invention, and it is aimed, therefore, to cover in the appended claims all such changes and modifications as fall within the scope of the invention.

## Claims

1. A video signal transmission apparatus for orthogonally transforming a video signal of unit block groups (GOB), each having a plurality of unit blocks (MB), into coefficient data (S5) and then quantizing said coefficient data into quantization data (S6), characterised by:
a local decoding means (21B) for quantizing and inverse-quantizing said coefficient data with a first quantizing means (23) based on first quantization information (S9) determined for each of said unit block groups, and performing inverse-orthogonal transformation to generate local decoded data (S22);
a difference data detecting means (28) for detecting the difference (S23) between said local decoded data decoded by said local decoding means and the original video signal (S1) corresponding to said local decoded data;
a controlling means (22) for determining second quantization information (S24) for each of said unit blocks based on the difference detected by said difference data detecting means; and
a second quantizing means (8) for quantizing said coefficient data based on said first quantization information and said second quantization information.

2. A video signal transmission apparatus according to claim 1, wherein said control means includes:
a distortion calculating means (30, 31) for calculating a distortion value (S32) for each said unit block based on the difference detected by said difference detecting means;
a standard distortion calculating means (33) for calculating a standard distortion value (S33) for each said unit block based on said first quantization information;
a distortion value comparing means (32) for comparing said distortion value and said standard distortion value output from said distortion calculating means and said standard distortion calculating means respectively; and
a quantization information control means (34) for controlling said second quantization information for each unit block based on the comparison result of said distortion value comparing means.

3. A video signal transmission apparatus according to claim 1, wherein said control means includes:
a distortion calculating means (42, 31) for calculating a distortion value (S32) based on the difference detected by said difference data detecting means and the level of the original video signal (S41) corresponding to said local decoded data;
a standard distortion calculating means (33) for calculating a standard distortion value (S33) for each said unit block based on said first quantization information;
a distortion value comparing means (32) for comparing said distortion value and said standard distortion value output from said distortion calculating means and said standard distortion calculating means; and
a quantization information controlling means (34) for controlling said second quantization information for each said block based on the comparison result of said distortion value comparing means.

4. A video signal transmission apparatus according to claim 1, further comprising:
a flatness detecting means (S1, S2, S3) for detecting flatness based upon how close each picture element constituting said unit blocks lies to a plane defined in horizontal-vertical-signal value space by three preceding picture elements; and
wherein said controlling means determines second quantization information (S24) for each said unit block corresponding to a distortion calculation value determined based on said flatness (S54) and said difference.

5. A video signal transmission apparatus according to claim 4, wherein said flatness detecting means includes:
a flat area predicting means (S1) for predicting a predicted picture element value (P04) of each picture element which constitute said unit blocks;
a difference detecting means (S2) for detecting the difference between said predicted picture element value predicted by said flat area predicting means and the original picture element value of the original video signal corresponding to said predicted picture element value; and
a flatness discriminating means (S3) for discriminating the flatness of said picture elements based on the detection result of said difference detection means.

6. A video signal transmission apparatus according to claim 4, wherein said controlling means includes:
a distortion calculating means (61) for weighting the difference data output from said difference data detecting means and calculating a calculated distortion value (S63) for each said unit block; and
a quantization information controlling means (64) for determining said second quantization information for each said unit block based on said calculated distortion value calculated by said distortion calculating means.

7. A video signal transmission apparatus according to any one of claims 1 to 6, comprising:
a means (9) for variable length code coding the data quantized by said quantizing means; and
a memory means (10) for controlling a transmission rate of transmission data output from said variable length code coding means to a transmission line;
wherein said first quantization information is generated based on the amount of the residual data remaining in said memory means.

8. A video signal transmission method for orthogonally transforming a video signal of unit block groups (GOB), each having a plurality of unit blocks (MB), into coefficient data (S5) and then quantizing said coefficient data into quantization data (S6), characterised by the steps of:
quantizing and inverse-quantizing said coefficient data based on first quantization information (S9) determined for each said unit block group, and performing inverse-orthogonal transformation to generate local decoded data (S22);
detecting the difference (S23) between said local decoded data and the original video signal (S1) corresponding to said local decoded data;
determining second quantization information (S24) for each said unit block based on said difference; and
quantizing said coefficient data based on said first quantization information and said second quantization information.

9. A video signal transmission method according to claim 8, wherein said step of determining said second quantization information includes the steps of:
calculating a distortion value (S32) based on said difference data;
calculating a standard distortion value (S33) for each said unit block based on said first quantization information; and
comparing said distortion value and said standard distortion calculation value.

10. A video signal transmission method according to claim 8, wherein said step of determining said second quantization information includes the steps of:
calculating a distortion value for each said unit block based on said difference and a level (S41) of the original video signal corresponding to said local decoded data;
calculating a standard distortion value for each of said unit blocks based on said first quantization information; and
comparing said distortion value and said standard distortion value.

11. A video signal transmission method according to claim 8, further comprising:
detecting flatness based upon how close (S52) each picture element constituting said unit blocks lies to a plane defined in horizontal-vertical-signal value space by three preceding picture elements; and
wherein said determining second quantization information (S24) for each said unit block corresponding to a distortion calculation value (S63) to be determined is based on said flatness and said difference.

12. A video signal transmission method according to claim 11, wherein said step of detecting flatness comprises the steps of:
predicting predicted picture element value (P04) for each picture element constituting said unit blocks;
determining the difference (S52) between said predicted picture element value and original picture element value of the original video signal corresponding to said predicted picture element; and
discriminating flatness of said picture element based on said difference between said predicted picture element value and original picture element value.

13. A video signal transmission method according to claim 11, wherein said step of determining said second quantization information comprises the steps of:
generating weighted distortion data (S61) from said flatness and said difference (S23);
determining a distortion calculation value (S63) for each said unit block based on said weighted distortion data; and
determining second quantization information for said each unit block based on said distortion calculation value.

14. A video signal transmission method according to any one of claims 8 to 13, wherein said video signal transmission method comprises the steps of:
generating transmission data (S8) by variable length code coding the data quantized based on said first and second quantization information;
temporarily storing said transmission data into memory means (10); and
determining said first quantization information based on a residual data amount of said memory means.

## Patentansprüche

1. Videosignalübertragungsgerät zum orthogonalen Transformieren eines Videosignals aus Blockeinheiten-Gruppen (GOB), wovon jede eine Vielzahl von Blockeinheiten (MB) hat, in Koeffizientendaten (S5) und anschließendem Quantisieren der Koeffizientendaten zu Quantisierungsdaten (S6), **gekennzeichnet** durch
ein lokales Decodierungsmittel (21B) zum Quantisieren und Inversquantisieren der Koeffizientendaten mit einem ersten Quantisierungsmittel (23) auf der Grundlage einer ersten Quantisierungsinformation (S9), die für jede der Blockeinheiten-Gruppen bestimmt ist, und zum Durchführen einer inversorthogonalen Transformation, um lokal decodierte Daten (S22) zu erzeugen,
ein Differenzdaten-Erfassungsmittel (28) zum Erfassen der Differenz (S23) zwischen den lokal decodierten Daten, die durch das lokale Decodierungsmittel decodiert sind, und dem ursprünglichen Videosignal (S1), welches den lokal decodierten Daten entspricht,
ein Steuermittel (22) zum Bestimmen einer zweiten Quantisierungsinformation (S24) für jede der Blockeinheiten auf der Grundlage der Differenz, die durch das Differenzdaten-Erfassungsmittel erfaßt ist, und
ein zweites Quantisierungsmittel (8) zum Quantisieren der Koeffizientendaten auf der Grundlage der ersten Quantisierungsinformation und der zweiten Quantisierungsinformation.

2. Videosignalübertragungsgerät nach Anspruch 1, wobei das Steuermittel enthält:
ein Verzerrungsberechnungsmittel (30, 31) zum Berechnen eines Verzerrungswerts (S32) für jede der Blockeinheiten auf der Grundlage der Differenz, die durch das Differenzerfassungsmittel erfaßt ist,
ein Normalverzerrungsberechnungsmittel (33) zum Berechnen eines Normalverzerrungswerts (S33) für jede der Blockeinheiten auf der Grundlage der ersten Quantisierungsinformation,
ein Verzerrungswertvergleichsmittel (32) zum Vergleichen des Verzerrungswerts und des Normalverzerrungswerts, die von dem Verzerrungsberechnungsmittel bzw. dem Normalverzerrungsberechnungsmittel ausgegeben sind, und
ein Quantisierungsinformations-Steuermittel (34) zum Steuern der zweiten Quantisierungsinformation für jede Blockeinheit auf der Grundlage des Vergleichsergebnisses aus dem Verzerrungswertvergleichsmittel.

3. Videosignalübertragungsgerät nach Anspruch 1, wobei das Steuermittel enthält:
ein Verzerrungsberechnungsmittel (42, 31) zum Berechnen eines Verzerrungswerts (S32) auf der Grundlage der Differenz, die durch das Differenzdaten-Erfassungsmittel erfaßt ist, und des Pegels des ursprünglichen Videosignals (S41), welches den lokal decodierten Daten entspricht,
ein Normalverzerrungsberechnungsmittel (33) zum Berechnen eines Normalverzerrungswerts (S33) für jede der Blockeinheiten auf der Grundlage der ersten Quantisierungsinformation,
ein Verzerrungswertvergleichsmittel (32) zum Vergleichen des Verzerrungswerts und des Normalverzerrungswerts, die von dem Verzerrungsberechnungsmittel und dem Normalverzerrungsberechnungsmittel ausgegeben sind, und
ein Quantisierungsinformations-Steuermittel (34) zum Steuern der zweiten Quantisierungsinformation für jeden Block auf der Grundlage des Vergleichsergebnisses aus dem Verzerrungswertvergleichsmittel.

4. Videosignalübertragungsgerät nach Anspruch 1, das ferner umfaßt:
ein Flachheitserfassungsmittel (S1, S2, S3) zum Erfassen einer Flachheit auf der Grundlage davon, wie eng jedes der Bildelemente, welche die Blockeinheiten bilden, an einer Ebene liegt, die in dem Horizontal-Vertikal-Signalwertraum durch drei vorhergehende Bildelemente definiert ist,
wobei das Steuermittel die zweite Quantisierungsinformation (S24) für jede der Blockeinheiten entsprechend einem Verzerrungsberechungswert bestimmt, welcher auf der Grundlage der Flachheit (S54) und der Differenz bestimmt ist.

5. Videosignalübertragungsgerät nach Anspruch 4, wobei das Flachheitserfassungsmittel enthält:
ein Flachbereichs-Vorauserkennungsmittel (S1) zum Vorauserkennen eines vorauserkannten Bildelementwerts (P04) jedes der Bildelemente, welche die Blockeinheiten bilden,
ein Differenzerfassungsmittel (S2) zum Erfassen der Differenz zwischen dem vorauserkannten Bildelementwert, der durch das Flachbereichs-Vorauserkennungsmittel vorauserkannt ist, und dem ursprünglichen Bildelementwert des ursprünglichen Videosignals, der dem vorauserkannten Bildelementwert entspricht, und
ein Flachheits-Diskriminierungsmittel (S3) zum Diskriminieren der Flachheit der Bildelemente auf der Grundlage des Erfassungsergebnisses aus dem Differenzerfassungsmittel.

6. Videosignalübertragungsgerät nach Anspruch 4, wobei das Steuermittel enthält:
ein Verzerrungsberechnungsmittel (61) zum Wichten der Differenzdaten, welche von dem Differenzdaten-Erfassungsmittel ausgegeben sind, und zum Berechnen eines berechneten Verzerrungswerts (S63) für jede der Blockeinheiten und
ein Quantisierungsinformations-Steuermittel (64) zum Bestimmen der zweiten Quantisierungsinformation für jede der Blockeinheiten auf der Grundlage des berechneten Verzerrungswerts, der durch das Verzerrungsberechnungsmittel berechnet ist.

7. Videosignalübertragungsgerät nach einem der Ansprüche 1 bis 6, das umfaßt:
ein Mittel (9) zur Variabellängencode-Codierung der Daten, welche durch das Quantisierungsmittel quantisiert sind, and
ein Speichermittel (10) zum Steuern einer Übertragungsrate für Übertragungsdaten, welche von dem Variabellängencode-Codierungsmittel an eine Übertragungsleitung ausgegeben werden,
wobei die erste Quantisierungsinformation auf der Grundlage der Menge der restlichen Daten, die in dem Speichermittel verbleiben, erzeugt wird.

8. Videosignalübertragungsverfahren zum orthogonalen Transformieren eines Videosignals aus Blockeinheiten-Gruppen (GOB), wovon jede eine Vielzahl von Blockeinheiten (MB) hat, in Koeffizientendaten (S5) und anschließendem Quantisieren der Koeffizientendaten zu Quantisierungsdaten (S6), **gekennzeichnet** durch Schritte zum
Quantisieren und Inversquantisieren der Koeffizientendaten auf der Grundlage einer ersten Quantisierungsinformation (S9), die für jede der Blockeinheiten-Gruppen bestimmt ist, und Durchführen einer inversorthogonalen Transformation, um lokal decodierte Daten (S22) zu erzeugen,
Erfassen der Differenz (S23) zwischen den lokal decodierten Daten und dem ursprünglichen Videosignal (S1), das den lokal decodierten Daten entspricht,
Bestimmen einer zweiten Quantisierungsinformation (S24) für jede der Blockeinheiten auf der Grundlage der said Differenz und
Quantisieren der Koeffizientendaten auf der Grundlage der ersten Quantisierungsinformation und der zweiten Quantisierungsinformation.

9. Videosignalübertragungsverfahren nach Anspruch 8, wobei der Schritt zum Bestimmen der zweiten Quantisierungsinformation Schritte enthält zum
Berechnen eines Verzerrungswerts (S32) auf der Grundlage der Differenzdaten,
Berechnen eines Normalverzerrungswerts (S33) für jede der Blockeinheiten auf der Grundlage der ersten Quantisierungsinformation und
Vergleichen des Verzerrungswerts und des Normalverzerrungs-Berechnungswerts.

10. Videosignalübertragungsverfahren nach Anspruch 8, wobei der Schritt zum Bestimmen der zweiten Quantisierungsinformation Schritte enthält zum
Berechnen eines Verzerrungswerts für jede der Blockeinheiten auf der Grundlage der Differenz und eines Pegels (S41) des ursprünglichen Videosignals, das den lokal decodierten Daten entspricht,
Berechnen eines Normalverzerrungswerts für jede der Blockeinheiten auf der Grundlage der ersten Quantisierungsinformation und
Vergleichen des Verzerrungswerts und des Normalverzerrungswerts.

11. Videosignalübertragungsverfahren nach Anspruch 8, das ferner umfaßt:
das Erfassen einer Flachheit auf der Grundlage davon, wie eng (S52) jedes der Bildelemente, welche die Blockeinheiten bilden, an einer Ebene liegt, die in dem Horizontal-Vertikal-Signalwertraum durch drei vorhergehende Bildelemente definiert ist,
wobei das Bestimmen der zweiten Quantisierungsinformation (S24) für jede der Blockeinheiten, welche einem zu bestimmenden Verzerrungsberechnungswert (S63) entspricht, auf der Flachheit und der Differenz basiert.

12. Videosignalübertragungsverfahren nach Anspruch 11, wobei der Schritt zum Erfassen der Flachheit Schritte umfaßt zum
Vorauserkennen eines vorauserkannten Bildelementwerts (P04) für jedes der Bildelemente, welche die Blockeinheiten bilden,
Bestimmen der Differenz (S52) zwischen dem vorauserkannten Bildelementwert und dem ursprünglichen Bildelementwert des ursprünglichen Videosignals, das dem vorauserkannten Bildelement entspricht, und
Diskriminieren der Flachheit des Bildelements auf der Grundlage der Differenz zwischen dem vorauserkannten Bildelementwert und dem ursprünglichen Bildelementwert.

13. Videosignalübertragungsverfahren nach Anspruch 11, wobei der Schritt zum Bestimmen der zweiten Quantisierungsinformation Schritte umfaßt zum
Erzeugen gewichteter Verzerrungsdaten (S61) aus der Flachheit und der Differenz (S23),
Bestimmen eines Verzerrungsberechnungswerts (S63) für jede der Blockeinheiten auf der Grundlage der gewichteten Verzerrungsdaten und
Bestimmen der zweiten Quantisierungsinformation für jede der Blockeinheiten auf der Grundlage des Verzerrungsberechnungswerts.

14. Videosignalübertragungsverfahren nach einem der Ansprüche 8 bis 13, wobei das Videosignalübertragungsverfahren Schritte umfaßt zum
Erzeugen von Übertragungsdaten (S8) durch Variabellängencode-Codierung der Daten, welche auf der Grundlage der ersten und der zweiten Quantisierungsinformation quantisiert sind,
vorübergehenden Laden der Übertragungsdaten in ein Speichermittel (10) und
Bestimmen der ersten Quantisierungsinformation auf der Grundlage der restlichen Datenmenge in dem Speichermittel.

## Revendications

1. Appareil de transmission de signal vidéo pour transformer orthogonalement un signal vidéo de groupes de blocs d'unité (GOB), ayant chacun une pluralité de blocs d'unité (MB), en des données de coefficient (S5) et pour quantifier ensuite lesdites données de coefficient en données de quantification (S6), caractérisé par :
un moyen de décodage local (21B) pour quantifier et quantifier en inverse lesdites données de coefficient avec un premier moyen de quantification (23) sur la base des premières informations de quantification (S9) déterminées pour chacun desdits groupes de blocs d'unité, et pour réaliser une transformation orthogonale inverse pour générer des données décodées locales (S22) ;
un moyen de détection de données de différence (28) pour détecter la différence (S23) entre lesdites données décodées locales décodées par ledit moyen de décodage local et le signal vidéo original (S1) correspondant auxdites données décodées locales ;
un moyen de commande (22) pour déterminer des secondes informations de quantification (S24) pour chacun desdits blocs d'unité sur la base de la différence détectée par ledit moyen de détection de données de différence ; et
un second moyen de quantification (8) pour quantifier lesdites données de coefficient sur la base desdites premières informations de quantification et desdites secondes informations de quantification.

2. Appareil de transmission de signal vidéo selon la revendication 1, dans lequel ledit moyen de commande comprend :
un moyen de calcul de distorsion (30, 31) pour calculer une valeur de distorsion (S32) pour chaque dit bloc d'unité sur la base de la différence détectée par ledit moyen de détection de différence ;
un moyen de calcul de distorsion standard (33) pour calculer une valeur de distorsion standard (S33) pour chaque dit bloc d'unité sur la base desdites premières informations de quantification ;
un moyen de comparaison de valeur de distorsion (32) pour comparer ladite valeur de distorsion et ladite valeur de distorsion standard fournies respectivement par ledit moyen de calcul de distorsion et par ledit moyen de calcul de distorsion standard ; et
un moyen de commande d'informations de quantification (34) pour commander lesdites secondes informations de quantification pour chaque bloc d'unité sur la base d'un résultat de comparaison dudit moyen de comparaison de valeur de distorsion.

3. Appareil de transmission de signal vidéo selon la revendication 1, dans lequel ledit moyen de commande comprend :
un moyen de calcul de distorsion (42, 31) pour calculer une valeur de distorsion (S32) sur la base de la différence détectée par ledit moyen de détection de données de différence et le niveau du signal vidéo original (S41) correspondant auxdites données décodées locales ;
un moyen de calcul de distorsion standard (33) pour calculer une valeur de distorsion standard (S33) pour chaque dit bloc d'unité sur la base desdites premières informations de quantification ;
un moyen de comparaison de valeur de distorsion (32) pour comparer ladite valeur de distorsion et ladite valeur de distorsion standard fournies par ledit moyen de calcul de distorsion et ledit moyen de calcul de distorsion standard ; et
un moyen de commande d'informations de quantification (34) pour commander lesdites secondes informations de quantification pour chaque dit bloc sur la base du résultat de comparaison dudit moyen de comparaison de valeur de distorsion.

4. Appareil de transmission de signal vidéo selon la revendication 1, comprenant en outre :
un moyen de détection de planéité (S1, S2, S3) pour détecter une planéité sur la base de la proximité à laquelle se trouve chaque élément d'image constituant lesdits blocs d'unité à un plan défini dans un espace de valeur de signal horizontal-vertical par trois éléments d'image précédents ; et
dans lequel ledit moyen de commande détermine des secondes informations de quantification (S24) pour chaque dit bloc d'unité correspondant à une valeur de calcul de distorsion déterminée sur la base de ladite planéité (S54) et de ladite différence.

5. Appareil de transmission de signal vidéo selon la revendication 4, dans lequel ledit moyen de détection de planéité comprend :
un moyen de prédiction de surface plane (S1) pour prédire une valeur prédite d'élément d'image (P04) de chaque élément d'image qui constitue lesdits blocs d'unité ;
un moyen de détection de différence (S2) pour détecter la différence entre ladite valeur prédite d'élément d'image prédite par ledit moyen de prédiction de surface plane et la valeur d'élément d'image originale du signal vidéo original correspondant à ladite valeur prédite d'élément d'image ; et
un moyen de discrimination de planéité (S3) pour discriminer la planéité desdits éléments d'image sur la base du résultat de détection dudit moyen de détection de différence.

6. Appareil de transmission de signal vidéo selon la revendication 4, dans lequel ledit moyen de commande comprend :
un moyen de calcul de distorsion (61) pour pondérer les données de différence fournies par ledit moyen de détection de données de différence et pour calculer une valeur calculée de distorsion (S63) pour chaque dit bloc d'unité ; et
un moyen de commande d'informations de quantification (64) pour déterminer lesdites secondes informations de quantification pour chaque dit bloc d'unité sur la base de ladite valeur calculée de distorsion calculée par ledit moyen de calcul de distorsion.

7. Appareil de transmission de signal vidéo selon l'une quelconque des revendications 1 à 6, comprenant :
un moyen (9) pour le codage de code de longueur variable des données quantifiées par ledit moyen de quantification ; et
un moyen de mémoire (10) pour commander un débit de transmission des données de transmission fournies par ledit moyen de codage de code de longueur variable sur une ligne de transmission ;
dans lequel lesdites premières informations de quantification sont générées sur la base de la quantité des données résiduelles restant dans ledit moyen de mémoire.

8. Procédé de transmission de signal vidéo pour transformer orthogonalement un signal vidéo de groupes de blocs d'unité (GOB), ayant chacun une pluralité de blocs d'unité (MB), en données de coefficient (S5) et pour quantifier ensuite lesdites données de coefficient en données de quantification (S6), caractérisé par les étapes de :
quantification et quantification inverse desdites données de coefficient sur la base desdites premières informations de quantification (S9) déterminées pour chaque dit groupe de blocs d'unité, et réalisation d'une transformation orthogonale inverse pour générer des données décodées locales (S22) ;
détection de la différence (S23) entre lesdites données décodées locales et le signal vidéo original (S1) correspondant auxdites données décodées locales ;
détermination des secondes informations de quantification (S24) pour chaque dit bloc d'unité sur la base de ladite différence ; et
quantification desdites données de coefficient sur la base desdites premières informations de quantification et desdites secondes informations de quantification.

9. Procédé de transmission de signal vidéo selon la revendication 8, dans lequel ladite étape de détermination desdites secondes informations de quantification comprennent les étapes de :
calcul d'une valeur de distorsion (S32) sur la base desdites données de différence ;
calcul d'une valeur de distorsion standard (S33) pour chaque dit bloc d'unité sur la base desdites premières informations de quantification ; et
comparaison de ladite valeur de distorsion et de ladite valeur de calcul de distorsion standard.

10. Procédé de transmission de signal vidéo selon la revendication 8, dans lequel ladite étape de détermination desdites secondes informations de quantification comprend les étapes de :
calcul d'une valeur de distorsion pour chaque dit bloc d'unité sur la base de ladite différence et d'un niveau (S41) du signal vidéo original correspondant auxdites données décodées locales ;
calcul d'une valeur de distorsion standard pour chacun desdits blocs d'unité sur la base desdites premières informations de quantification ; et
comparaison de ladite valeur de distorsion et de ladite valeur de distorsion standard.

11. Procédé de transmission de signal vidéo selon la revendication 8, comprenant en outre :
une détection de planéité sur la base de la proximité (S52) à laquelle se trouve chaque élément d'image constituant lesdits blocs d'unité à un plan défini dans l'espace de valeur de signal horizontal-vertical par trois éléments d'image précédents ; et
dans lequel ladite détermination des secondes informations de quantification (S24) pour chaque dit bloc d'unité correspondant à une valeur de calcul de distorsion (S63) à déterminer est sur la base de ladite planéité et de ladite différence.

12. Procédé de transmission de signal vidéo selon la revendication 11, dans lequel ladite étape de détection de planéité comprend les étapes de :
prédiction de la valeur prédite d'élément d'image (P04) pour chaque élément d'image constituant lesdits blocs d'unité ;
détermination de la différence (S52) entre ladite valeur d'élément d'image prédite et la valeur d'élément d'image originale du signal vidéo original correspondant audit élément d'image prédit ; et
discrimination de planéité desdits éléments d'images sur la base de ladite différence entre ladite valeur prédite d'élément d'image et la valeur originale d'élément d'image.

13. Procédé de transmission de signal vidéo selon la revendication 11, dans lequel ladite étape de détermination desdites secondes informations de quantification comprend les étapes de :
génération de données de distorsion pondérée (S61) à partir de ladite planéité et de ladite différence (s23) ;
détermination d'une valeur de calcul de distorsion (s63) pour chaque dit bloc d'unité sur la base des données de distorsion pondérée ; et
détermination des secondes informations de quantification pour ledit chaque bloc d'unité sur la base de ladite valeur de calcul de distorsion.

14. Procédé de transmission de signal vidéo selon l'une quelconque des revendications 8 à 13, dans lequel ledit procédé de transmission de signal vidéo comprend les étapes de :
génération des données de transmission (s8) par un codage de code de longueur variable des données quantifiées sur la base desdites premières et secondes informations de quantification ;
stockage temporairement desdites données de transmission dans un moyen de mémoire (10) ; et
détermination desdites premières informations de quantification sur la base d'une quantité de données résiduelles dudit moyen de mémoire.
